# FASCICULE DE BREVET EUROPEEN

(11) **EP 2 616 904 B1**
(45) Date de publication et mention de la délivrance du brevet: **26.12.2018**
(21) Numéro de dépôt: 11767953.0
(22) Date de dépôt: 16.09.2011
(51) Int. Cl.: G06F 3/01, A63B 22/18, A63B 22/16, A63B 23/04, A63F 13/245, A63F 13/214

(54) **DISPOSITIF POUR LA PRATIQUE INTERACTIVE DE JEUX VIDEO**
VORRICHTUNG ZUM INTERAKTIVEN ÜBEN VON VIDEOSPIELEN
DEVICE FOR THE INTERACTIVE PRACTICE OF VIDEO GAMES

(30) Priorité: 16.09.2010 FR 1003692
(43) Date de publication de la demande: 24.07.2013
(73) Titulaire: Bigben Interactive SA, 59818 Lesquin (FR)
(72) Inventeur: CLAUDEL, Frédéric, F-75010 Paris (FR); NICOLAS, Frédéric, F-77250 Moret-Sur-Loing (FR)
(74) Mandataire: Vigand, Philippe
(86) Numéro de dépôt international: PCT/EP2011/066158
(87) Numéro de publication internationale: WO 2012/035161

(56) Documents cités:
- EP-A1- 1 691 897
- WO-A1-00/57975
- DE-U1- 20 213 691
- US-A- 5 613 690
- US-A1- 2008 004 111
- US-A1- 2009 093 315
- US-A1- 2009 227 426
- US-A1- 2010 216 551

## Description

La présente invention se rapporte au domaine des dispositifs interactifs pour jeux vidéo, utilisés en association avec des systèmes d'imagerie et de sons tels qu'une télévision reliée à une station de jeu ou à une unité de traitement numérique. La présente invention se rapporte plus particulièrement à un dispositif de gymnastique interactive.

Il est déjà connu de l'art antérieur l'utilisation de périphériques de jeux vidéo cherchant à augmenter les interactions ludiques et sportives pour un plus grand réalisme de la pratique des jeux vidéo. On a vu ainsi se développer des plateformes et des planches d'équilibre, autrement dites plateformes d'équilibre, interactives.

Le document US 2008/261696 décrit une plateforme interactive capable de saisir le poids d'un utilisateur ainsi que d'évaluer, du fait de la répartition de ce poids sur ses différents capteurs de pression, le centre de gravité de l'utilisateur, et d'envoyer ces signaux à une console de jeu qui les retranscrit alors dans un jeu vidéo. Ce dispositif ne peut cependant pas informer de la position de l'utilisateur lorsque ce dernier n'est pas sur la plateforme, ce qui limite les applications sportives et ludiques. D'autre part, la plateforme est stable et n'oscille pas, ce qui la rend inutilisable en l'état en tant que plateforme d'équilibre. Le serait-elle, par l'adjonction d'un accessoire sous sa face inférieure par exemple, elle ne possède pas le type de capteurs qui permet de saisir de manière fine les variations angulaires auxquelles elle serait soumise et donc de les retranscrire de manière adéquate dans un programme ou un jeu vidéo.

Le document EP 1 691 897 décrit une plateforme entourée par un tapis sensible à la pression. Un tel dispositif permet de connaitre la position d'un utilisateur lorsqu'il est monté sur la plateforme et lorsqu'il est autour d'elle dans la limite dudit tapis. Cependant, l'utilisation, dans un cadre gymnique, d'un tapis sensible à la pression présente des inconvénients. En effet, le tapis peut, au cours de la pratique sportive, se plier et devenir ainsi à la fois imprécis en terme de positionnement de l'utilisateur et cause de chute de ce dernier. D'autre part, le positionnement de l'utilisateur est déterminé par rapport à l'activation de zones
prédéfinies sur le tapis : ces zones ne peuvent donc pas être adaptées en temps réel par le logiciel de jeu en fonction du type d'exercice réalisé. De plus, la précision du positionnement de l'utilisateur s'accroit en fonction du nombre de zones du tapis, et donc de la complexité de fabrication du dispositif et de son coût. D'autre part, l'utilisation du dispositif requiert au minimum que l'utilisateur ait, devant sa télévision, une surface libre égale à celle du tapis, ce qui ne peut pas toujours être le cas. Enfin, d'un point de vue commercial, les tendances actuelles privilégient les objets compacts et de taille réduite, or le tapis va donner à l'ensemble l'allure d'un objet de grande taille.

Le document US 5,613,690 décrit une planche d'équilibre composée d'une partie supérieure ayant une surface inférieure convexe, reposant sur une base, telle que les variations angulaires de la planche d'équilibre, sur laquelle se tient l'utilisateur, soit captées et retransmises à une unité de traitement numérique. Une telle planche d'équilibre ne peut cependant pas indiquer la position de l'utilisateur si ce dernier n'est pas monté sur la planche. Elle ne peut pas non plus indiquer le poids de l'utilisateur.

Le document US 6,106,397 décrit un dispositif muni d'un moyen de positionnement détectant lorsque l'utilisateur s'éloigne d'une aire définie, indiquée comme étant généralement un axe vertical, située sur une plateforme. De manière analogue, le document US 2004/242390 décrit un dispositif constitué d'une surface concave sur laquelle se tient l'utilisateur, et tel que la position de l'utilisateur sur ladite surface est connue. Les moyens de positionnement décrits ne détectent pas la position des pieds de l'utilisateur autour du dispositif, ce qui constitue une information essentielle pour le contrôle des chorégraphies gymniques avec plateforme.

Le document US 5,314,391 décrit un tapis de course muni d'un dispositif permettant de saisir l'éloignement de l'utilisateur situé sur le tapis, par rapport à l'avant et à l'arrière de l'appareil, et réglant en conséquence la vitesse de déroulement du tapis. Un tel dispositif permet de connaître certaines positions de l'utilisateur lorsqu'il est sur le dispositif, mais pas autour de celui-ci, et encore moins la disposition des pieds de l'utilisateur autour du dispositif.

Le document US2010216551 (A1) décrit un jeu vidéo et un périphérique pour ce jeu. Le document DE20213691 (U1) décrit une plateforme d'entraînement qui est sur un rouleau et agencée pour recevoir un utilisateur avec une position indiquée par des capteurs d'inclinaison et de proximité. Le document US 2008/004111 (A1) décrit un contrôleur de jeux vidéo de type "plateforme de step" comprenant des capteurs pour déterminer la position des pieds de l'utilisateur autour de la plateforme.

Il apparaît de manière générale qu'aucun des documents de l'art antérieur ne fournit un dispositif interactif, de type plateforme, pour des applications gymniques permettant une utilisation comme accessoire repère pour la pratique de gymnastique interactive sur et autour de la plateforme.

La présente invention entend remédier aux lacunes de l'art antérieur pour des applications gymniques utilisant une plateforme. A cet effet, un but principal de l'invention est de constituer un périphérique interactif ludique et sportif pour unité de traitement numérique comme par exemple les consoles de jeux vidéo, les ordinateurs ou les bornes d'arcade, permettant de réaliser des séances interactives de gymnastique utilisant une plateforme, tel que les positions de l'utilisateur autour et sur la plateforme soient perçues par le dispositif de manière notamment à pouvoir proposer et contrôler la bonne réalisation de chorégraphies de mouvements à réaliser autour et sur la plateforme.

Pour ce faire, la présente invention concerne un dispositif pour la pratique interactive de la gymnastique en association avec une unité de traitement numérique exécutant un programme de gymnastique à suivre par un utilisateur selon la revendication indépendante 1, à savoir comprenant une plateforme munie d'un système de capteurs adapté pour capter la position d'obstacles et/ou des pieds de l'utilisateur autour de ladite plateforme, le système de capteurs étant un système de télémètres, et de moyens de transmission des signaux issus des capteurs à l'unité de traitement numérique, dans lequel la plateforme est munie de pieds amovibles, de sorte à pouvoir être utilisée selon un premier état avec les pieds, dans lequel la plateforme est soutenue par les pieds, et dans un second état sans les pieds, dans lequel la partie inférieure de la plateforme repose sur le sol, la partie inférieure de la plateforme étant convexe, et en ce que le système de télémètres est apte à indiquer l'inclinaison de la plateforme sans les pieds par évaluation de la distance de la plateforme avec le sol.

Un tel dispositif pourra être avantageusement utilisé pour des séances de gymnastiques interactives utilisant la plateforme, en ce sens que le système de positionnement des obstacles autour de la plateforme pourra être utilisé pour positionner les pieds de l'utilisateur lorsqu'ils sont autour de la plateforme, et considérés alors comme des obstacles, et le système de liaison pourra envoyer cette information au programme pour que ce dernier la prenne en compte.

Selon un mode de réalisation préférentiel, la plateforme comprend une partie supérieure plane.

Selon un mode de réalisation préférentiel, la partie supérieure du dispositif est parallèle au sol si la plateforme est posée sur une surface plane.

Selon un mode de réalisation, la plateforme comprend au moins un capteur de pression. Un tel capteur est de préférence activé lorsque l'usager se tient sur la plateforme. Ce capteur peut envoyer un signal « tout ou rien » ou analogique en fonction du poids exercé sur la plateforme.

Un tel capteur « tout ou rien » peut par exemple être constitué par une surface sensible à la pression. Une telle surface comprend généralement deux strates planes conductrices séparées par un matériau de type mousse dans lequel plusieurs orifices de diamètres suffisants ont été créés. Au repos, lorsque qu'aucune pression extérieure n'est exercée sur la surface sensible à la pression, la force d'expansion du matériau de type mousse tient séparées les deux strates conductrices et ouvre le circuit électrique dont celles-ci sont les extrémités. Lorsqu'on exerce une pression supérieure à la force d'expansion du matériau de type mousse, les deux strates conductrices se rejoignent et se touchent au travers des orifices du matériau de type mousse, fermant ainsi le circuit électrique dont les strates conductrices sont les extrémités.

Selon un mode de réalisation, la surface supérieure de la plateforme est une surface sensible à la pression.

Selon un mode de réalisation préférentiel, le dispositif selon l'invention comprend des éléments pouvant être combinés avec les pieds de la plateforme de manière à en faire varier la hauteur.

Selon un mode de réalisation préférentiel, chacun de ces pieds est associé à un capteur de pression captant la pression exercée par la plateforme sur ledit pied.

Selon un mode de réalisation, les capteurs de pression sont situés dans les logements des pieds situés dans la plateforme. Un tel système peut par exemple être constitué par une barre flexible située au fond du logement du pied et qui repose sur le pied lorsque celui-ci est connecté à la plateforme. Un capteur disposé sur la barre permet alors d'évaluer la courbure de la barre flexible du fait de la force de réaction du pied relativement au poids exercé par l'utilisateur lorsqu'il est sur la plateforme, et d'en déduire une mesure analogique du poids en fonction d'un calibrage de la plateforme et des caractéristiques de flexion, supposées connues, de la barre flexible.

Selon un mode de réalisation, les capteurs de pression sont situés dans les pieds et les signaux issus desdits capteurs sont transmis à la plateforme par des connections électriques entre les pieds et la plateforme.

Selon un mode de réalisation préférentiel avec capteurs de pression, la pression est captée de manière analogique, ce qui permet de déduire, par étude des différentes pressions indiquées par les capteurs, la projection du centre de gravité de l'utilisateur sur la surface supérieure de la plateforme. Ainsi, si la plateforme est rectangulaire et que les pieds - et leurs capteurs - sont au nombre de quatre, disposés aux quatre coins de la plateforme, cette projection pourra être définie comme l'intersection des médianes du triangle déterminé par les milieux pondérés des trois segments issus du capteur captant le plus de pression vers les trois autres capteurs.

Un but de l'invention est de constituer un périphérique interactif ludique et sportif permettant à un utilisateur de faire des exercices interactifs lui permettant de travailler son équilibre, de manière à compléter, avec un seul et même dispositif, les exercices gymniques du but principal de l'invention.

Dans ce but, selon le mode de réalisation préférentiel de l'invention, la surface inférieure de la plateforme est convexe et les pieds issus de la plateforme sont amovibles. Ainsi, une fois les pieds retirés, la plateforme devient une plateforme d'équilibre. Selon ce mode de réalisation, la forme inférieure est convexe principalement sur sa périphérie, avec une surface plate en son centre équivalent à environ 2/3 de la surface supérieure de la plateforme, afin que le dispositif soit relativement stable, même s'il peut tanguer et rouler. Il est important de noter que le mode de réalisation avec pieds amovibles est compatible avec les modes de réalisation avec capteurs de pression situés dans les pieds ou dans le logement des pieds indiqués précédemment.

Avantageusement, dans un mode de réalisation préférentiel, des pieds de différentes hauteurs seront fournis avec le dispositif afin de permettre de faire varier la hauteur de la plateforme et donc la difficulté des exercices gymniques.

Selon un mode de réalisation préférentiel, la plateforme comprend des capteurs angulaires. Ces capteurs fournissent les valeurs angulaires d'inclinaison de la plateforme lorsque celle-ci est utilisée comme planche d'équilibre. Ces capteurs angulaires pourront être constitués par un ou plusieurs gyroscopes ou par plusieurs accéléromètres ou par une combinaison de ces capteurs. Selon un mode de réalisation avec accéléromètres, trois accéléromètres seront disposés de manière orthogonale avec les axes de deux des accéléromètre dans le plan de la surface supérieure de la plateforme de façon à capter, dans le repère orthonormé des accéléromètres, les composantes du vecteur accélération de la gravité terrestre et à en déduire une inclinaison de la plateforme par rapport à ce dernier, en supposant que l'accélération de la gravité est verticale.

Selon un mode de réalisation avec planche d'équilibre, la projection du centre de gravité de l'utilisateur sur la surface supérieure de la plateforme pourra être estimée par l'inclinaison de la planche telle qu'évaluée par le dispositif selon l'invention. Les coordonnées cartésiennes de cette projection sur la surface supérieure de la plateforme correspondent pour chacune des coordonnées au ratio de l'angle d'inclinaison sur l'angle maximal multiplié par la demi-longueur de la plateforme.

Le dispositif comprend un système logé dans la plateforme, captant la position des obstacles autour de la plateforme. Ce système servira notamment à évaluer la position des pieds de l'utilisateur lorsqu'ils sont autour de la plateforme.

Selon un mode de réalisation, le système de positionnement des obstacles comprend une phase de calibrage où l'utilisateur se place sur la plateforme, et pendant laquelle le système de positionnement des obstacles autour de la plateforme établit puis mémorise une topologie des obstacles qui ne sont pas constitués par les pieds du joueur. Sera alors considéré comme représentatif d'un « pied de l'utilisateur » dans une zone surveillée par le système de positionnement, un signal qui aura été réfléchi alors qu'il n'aura pas atteint la distance séparant la plateforme du plus proche obstacle recensé dans la topologie de cette zone lors de la phase de calibrage. Selon ce mode de réalisation, pourra être considéré représentatif de « l'utilisateur ayant les deux pieds sur la plateforme », le fait qu'aucun obstacle, autre que ceux recensés lors de la phase de calibrage, n'est perçu par le système de positionnement des obstacles. Un tel système de positionnement permet donc de savoir si les pieds de l'utilisateur sont autour et/ou sur la plateforme.

Selon un mode de réalisation préférentiel, les télémètres sont situés dans la plateforme et dirigés vers l'extérieur du pourtour de celle-ci, de manière à ce que l'espace couvert par le système de télémètres soit la portion d'espace comprise d'une part entre le plan constitué par le sol et d'autre part le plan passant par la partie supérieure de la plateforme, voire au dessus, à l'exclusion du volume constitué par la plateforme elle-même.

Selon des modes de réalisation possibles, de tels télémètres sont constitués par des télémètres à ultra-son, des télémètres à infra rouge ou des télémètres radio ou une combinaison de ceux-ci. Le principe le plus courant de fonctionnement d'un télémètre consiste en une source émettrice d'un signal envoyé vers une zone à surveiller. Lorsque le signal rencontre un obstacle, le signal est réfléchi et est renvoyé vers la région de la source où il est récupéré par un capteur adéquat généralement situé près de la source du signal. Dans le cas d'un télémètre à infra rouge, la source est un émetteur de lumière infra rouge, qui est émise généralement sous forme de courte pulsation, et le récepteur est composé d'une ou plusieurs cellules photoconductrices. Le signal reçu est généralement augmenté afin de pouvoir être exploité. La distance entre la source et l'obstacle est ensuite évaluée en fonction du temps de parcours du signal dont la vitesse de déplacement est connue. La distance est donnée par la formule : distance = vitesse x temps / 2. Plus le signal est directionnel, plus l'évaluation de la localisation de ce signal par rapport à la source, en plus de sa distance, peut être réalisée en commandant la source pour qu'elle balaye séquentiellement l'espace de la zone à surveiller et en analysant les signaux réfléchis par tranche d'émission.

Un autre type de fonctionnement de télémètre, principalement utilisé pour les télémètres infra rouge, consiste à évaluer la distance d'un obstacle par un procédé de triangulation utilisant une lentille, généralement une lentille de Fresnel, focalisant le signal retour et l'envoyant sur une rangée de récepteurs, ce qui permet de connaitre par triangulation la distance de l'obstacle ayant réfléchi le signal.

Par la suite, on appellera axe principal du télémètre l'axe de symétrie du cône à l'angle le plus fermé dans lequel s'inscrit le signal issue d'une source de télémètre. Il s'agit de l'axe vers lequel « pointe » le télémètre.

Selon un mode de réalisation, les axes principaux des télémètres sont parallèles au sol si la plateforme est posée sur une surface plane.

Selon une variante de réalisation, les axes principaux des télémètres sont dirigés vers le sol de manière à ce que le signal issu du télémètre touche le sol à une distance prédéfinie de la plateforme. Cette distance pourra par exemple être égale à la plus grande distance à laquelle pourra se trouver un pied de l'utilisateur utilisant la plateforme.

Selon un mode de réalisation, la plateforme comprend au moins quatre sources de signal disposées de manière à envoyer un signal dans les zones définies comme étant en face des quatre côtés du plus petit rectangle dans lequel s'inscrit la surface supérieure de la plateforme, sur une hauteur égale à la hauteur de ladite plateforme. Chacune de ces sources de signal est associée à un récepteur du signal. Un tel système pourra être constitué par exemple d'un certain nombre de télémètres à infra rouge disposés le long de la tranche de la plateforme.

Selon un autre mode de réalisation, la plateforme est de forme circulaire, les télémètres étant disposés sur la périphérie de la plateforme de manière à couvrir l'espace autour de celle-ci. Un des avantages de ce mode de réalisation tient en ce qu'une forme circulaire peut apparaitre comme moins directive quant à la position des pieds de l'utilisateur, alors que les petits côtés d'une forme en rectangle peuvent être considérés comme une indication implicite de l'endroit où poser les pieds. En usage plateforme d'équilibre, l'utilisateur ne sera alors guidé, dans le placement ou déplacement de ces pieds, que par sa recherche d'équilibre. La mise en place du dispositif pour une séance gymnique s'en trouve aussi facilitée car, du fait de la symétrie centrale de la forme circulaire, il n'y a pas de « côté » à placer dans une certaine position par exemple par rapport à l'écran de télévision.

Selon un mode de réalisation, la plateforme comprend au moins quatre sources de signal disposées de manière à envoyer un signal dans les zones définies comme étant en face des quatre coins du plus petit rectangle dans lequel s'inscrit la surface supérieure de la plateforme, sur une hauteur égale à la hauteur de ladite plateforme. Chacune de ces sources de signal est associée à un récepteur du signal.

Selon un mode de réalisation, la plateforme comprend une seule source de signal qui est disposée sur un système rotatif situé au centre de la plateforme et qui fait tourner la source de signal sur elle-même d'un certain nombre de degrés par unité de temps.. Le récepteur adéquat est situé à côté de la source sur le système rotatif et tourne de concert avec la source. La plateforme comprend en outre un certain nombre d'ouvertures entre la source et l'extérieur de la plateforme tel que si la source est alignée avec une des ouvertures et est activée, le signal émis sera envoyé à l'extérieur de la plateforme dans une aire définie et sera réfléchi par le même chemin. Le système rotatif est tel qu'il positionne la source et son récepteur séquentiellement en face de chacune des ouvertures et que la source envoie alors un signal et attend le signal réfléchi un temps équivalent à une distance maximale donnée. Une seule source et un seul récepteur permettent alors de couvrir l'ensemble des zones à l'extérieur de la plateforme.

Selon un mode de réalisation, certaines sources de signal (et les récepteurs associés) sont placées sur un système rotatif, afin que sources et récepteurs puissent couvrir une aire plus importante que s'ils étaient immobiles.

Selon un mode de réalisation avec télémètres à infra rouge, certaines sources de signal (et les récepteurs associés) sont placées derrière une lentille diffractant le signal émis et focalisant le signal de retour, ce qui permet auxdites source de couvrir une aire plus vaste qu'à défaut d'utilisation de lentille. La direction de laquelle est issu le signal réfléchi pourra alors être établie par triangulation comme décrit précédemment.

Selon un mode de réalisation, le dispositif selon l'invention pourra comprendre, selon les zones à couvrir, des sources de signaux avec lentille diffractante, par exemple pour les sources situées sur les côtés du rectangle dans lequel s'inscrit la plateforme, et des sources sans lentille diffractante, éventuellement montées sur système rotatif, par exemple pour les sources situées aux coins du rectangle dans lequel s'inscrit la plateforme, de manière à pouvoir couvrir l'aire la plus vaste possible avec le plus petit nombre de sources de signal.

Selon un mode de réalisation, le système de positionnement des obstacles pourra être utilisé pour évaluer l'angle d'inclinaison de la plateforme lorsqu'elle est utilisée comme planche d'équilibre. En effet, en ce cas, lorsque la plateforme est inclinée, le sol apparaitra au système de positionnement des obstacles comme un obstacle proche du côté de la plateforme qui penche vers le sol, alors qu'il y aura éloignement des obstacles du côté de la plateforme qui est levé. Plus la distance évaluée avec le sol, considéré comme un obstacle, sera courte, plus la plateforme sera inclinée. L'équilibre correspondant à la partie supérieure de la plateforme à l'horizontale, se traduit, s'il y a eu calibrage de la topologie des obstacles comme décrit précédemment, par le fait que les distances de la plateforme aux obstacles correspondent à celles mémorisées lors du calibrage.

Selon un mode de réalisation préférentiel où le système de télémètres est utilisé pour déterminer l'inclinaison de la plateforme lorsqu'elle est utilisée comme planche d'équilibre, les axes principaux des télémètres pointeront préférentiellement vers le sol de manière à capter au plus tôt les variations de distance entre la tranche de la plateforme et le sol. Selon ce mode de réalisation, il pourra y avoir un mode « planche d'équilibre » tel que lorsque la plateforme est utilisée comme planche d'équilibre, les axes des télémètres sont dirigés vers le sol suivant un angle spécifique déterminé de manière à optimiser l'évaluation par les télémètres de l'inclinaison de la plateforme. Selon ce mode de réalisation préférentiel, l'adjonction au dispositif de capteurs angulaires de type gyroscopes ou accéléromètres, comme indiqués précédemment, ne sera envisagée qu'au cas où le degré de précision des variations angulaires souhaité ne serait pas accessible au seul système de télémètres.

Selon un mode de réalisation avec calibrage, le système de positionnement des obstacles pourra être utilisé pour déterminer la forme du pied de l'utilisateur, pointant face à la plateforme ou de profil, à partir d'un calibrage réalisé au début de la séance. En effet, lorsque le pied de l'utilisateur pointe vers la plateforme, l'obstacle qu'il constitue est plus étroit que lorsqu'il est « de profil » par rapport à la plateforme : cela détermine deux images différentes pour le système de positionnement et donc la possibilité de les différencier. Connaitre la position du pied de l'utilisateur lorsqu'il réalise une chorégraphie peut être utilisé par le programme interactif pour contrôler si l'utilisateur réalise correctement ou non la chorégraphie si celle-ci indique la position que doit prendre le pied de l'utilisateur par rapport à la plateforme.

Le dispositif selon l'invention comprend un système de liaison envoyant les signaux issus des capteurs de la plateforme à une unité de traitement numérique.

Selon le mode de réalisation préférentiel, ce système de liaison envoie à une unité de traitement numérique les signaux issus de l'ensemble des capteurs de la plateforme, qui sont des capteurs de positionnement et, selon les modes de réalisation, des capteurs de pression, des capteurs angulaires etc.

Selon un mode de réalisation préférentiel, ce système de liaison est un système sans fil.

Selon un mode de réalisation préférentiel, ce système de liaison associe à chaque signal un identifiant spécifique à chaque plateforme de manière à distinguer les signaux issus de chaque plateforme et ainsi permettre à plusieurs plateformes d'être utilisées simultanément sur une même unité de traitement numérique.

Selon un mode de réalisation préférentiel, ce système de liaison est bidirectionnel, c'est-à-dire qu'il envoie des signaux issus du dispositif à l'unité de traitement numérique, mais aussi qu'il transmet au dispositif des signaux issus de l'unité de traitement numérique. Selon ce mode de réalisation, le dispositif selon l'invention est muni d'actionneurs qui sont activés par les signaux issus de l'unité de traitement numérique. Il pourra s'agir par exemple de lumières qui s'allument sur le dispositif en fonction des scores réalisés ou des difficultés des chorégraphies. D'autres types d'actionneurs sont envisageables, comme par exemple des retours d'effet mécaniques (tremblements, vibrations), sonores etc.

On comprendra mieux l'invention à l'aide de la description, faite ci-après à titre purement explicatif, d'un mode de réalisation de l'invention, en référence aux figures annexées :
- la figure 1 illustre une vue d'ensemble du dispositif selon l'invention, d'une unité de traitement numérique et d'un écran d'affichage;
- la figure 2 illustre une vue en perspective du dispositif selon l'invention;
- la figure 3 illustre une vue de coupe plane de la partie supérieure de la plateforme du dispositif selon l'invention montrant le système de télémètres;
- la figure 4 illustre une vue en situation du dispositif selon l'invention, d'un utilisateur et du système de télémètres;
- la figure 5A illustre une vue en perspective du dispositif selon l'invention avec les pieds retirés;
- la figure 5B illustre une vue en situation avec utilisateur du dispositif selon l'invention utilisé comme planche d'équilibre;

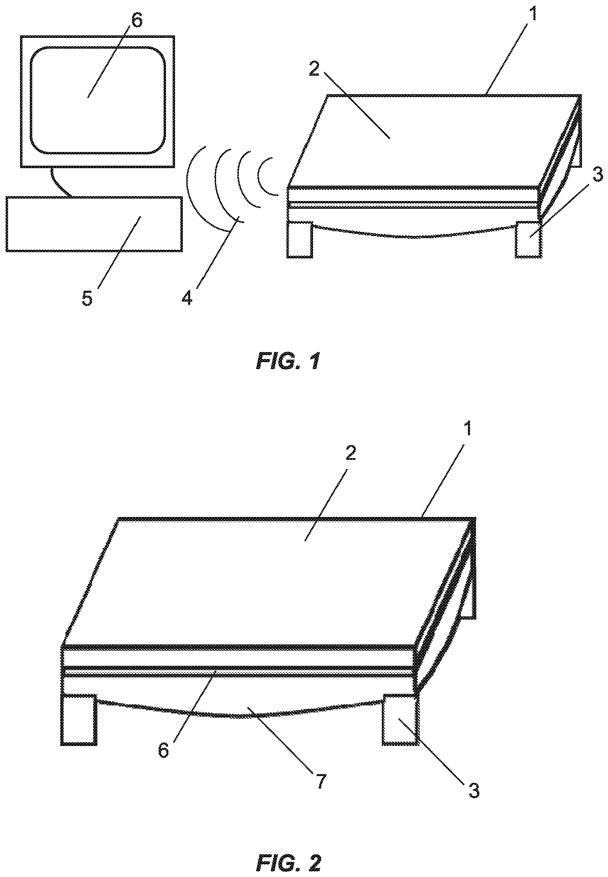

Suivant un mode de réalisation représentée en Figure 1, le dispositif selon l'invention est constitué d'une plateforme 1 ayant une partie supérieure plane 2 soutenue par quatre pieds 3. Le dispositif selon l'invention est relié par un système de liaison bidirectionnelle 4 à une unité de traitement numérique 5 (reliée à un écran d'affichage 6) à laquelle il transmet les signaux issus du dispositif selon l'invention.

La Figure 2 représente le dispositif selon l'invention en perspective. On y voit la plateforme 1, avec une surface supérieure plane 2, des pieds 3, sur la tranche de la plateforme, un système de télémètres 6 et une surface inférieure convexe 7. La surface supérieure plane 2 est par exemple constituée d'une surface sensible à la pression activée lorsqu'un utilisateur pèse sur la partie supérieure de la plateforme.

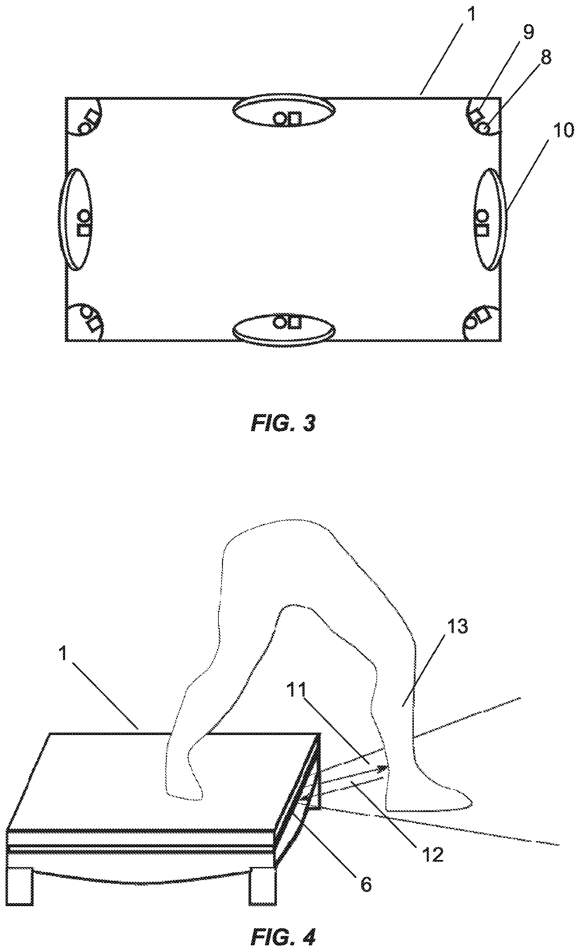

La Figure 3 illustre une vue de coupe plane de la partie supérieure de la plateforme du dispositif selon l'invention montrant le système de télémètres. On peut voir sur les quatre côtés et les quatre coins de la plateforme 1, les sources de signaux 8 du système de télémètres à infra rouge ainsi que les récepteurs associés 9. Les sources situées sur les côtés sont associées à une lentille 10 qui diffracte le signal émis, permettant ainsi à la source de couvrir une aire plus importante, et focalise le signal retour.

La Figure 4 illustre le dispositif selon l'invention en situation, et en particulier le positionnement de la jambe d'un utilisateur se tenant sur la plateforme 1 par télémètres au moyen du signal émis 11 par le système de télémètres 6 et du signal réfléchi 12 par la jambe 13 de l'utilisateur, jusqu'au récepteur du système de télémètres.

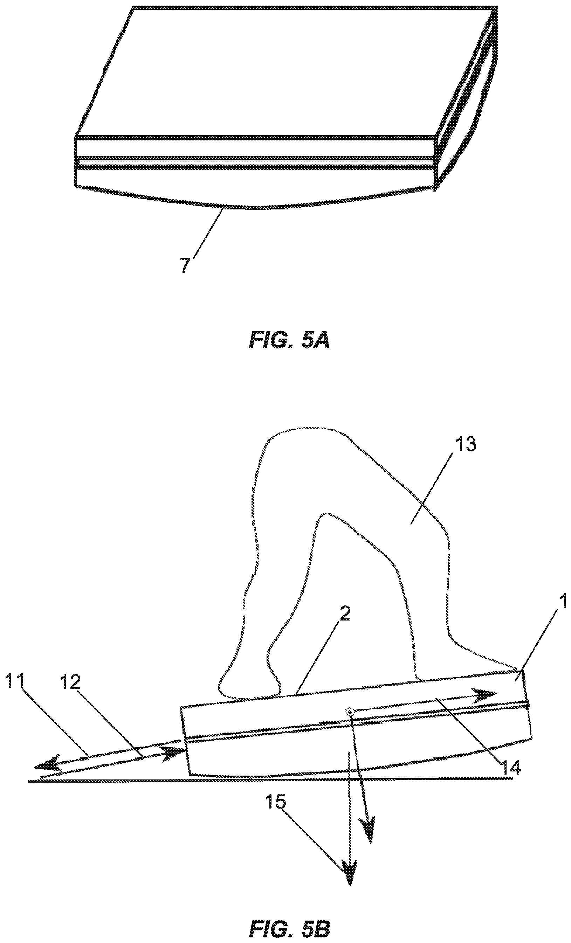

La Figure 5A représente le dispositif selon l'invention avec les pieds retirés, et sa surface inférieure convexe 7 reposant sur le sol.

La Figure 5B représente le dispositif selon l'invention sans les pieds, et avec un utilisateur - dont les jambes 13 sont représentées - sur la plateforme. L'inclinaison de la plateforme est déterminée à la fois par le système de positionnement d'obstacle qui détecte, via un signal émis 11 et réfléchi 12, la proximité du sol, et aussi par un système de trois accéléromètres orthogonaux, dont les trois axes 14 (y compris deux sur le plan de la surface supérieure 2 de la plateforme 1) sont représentés, permettant d'évaluer la position relative du vecteur de gravité 15 supposé vertical, et donc l'inclinaison de la plateforme.

Suivant un mode de réalisation, les signaux émis par le dispositif selon l'invention seront accompagnés d'un signal spécifique permettant d'identifier que l'émetteur des signaux est un périphérique de la même catégorie que le dispositif selon l'invention. Un tel signal identifiant permettra par exemple de s'assurer, en cas de concours ou de jeux en réseau faisant intervenir plusieurs participants éloignés, que l'ensemble des concurrents sont tous munis d'un périphérique du même type que celui du dispositif selon l'invention.

Selon un mode de réalisation, des diodes lumineuses sont placées sous la surface supérieure ou le long du pourtour de la plateforme et indiquent à l'utilisateur, par un signal lumineux soit la position qu'a pris son pied, soit, par exemple dans un cadre d'apprentissage ou de jeu, la position qu'il doit prendre. Ces différentes fonctionnalités pourront être gérées par le procédé d'imagerie et de sons fonctionnant sur l'unité de traitement numérique auquel est connecté le dispositif.

Le dispositif selon l'invention peut être avantageusement combiné à d'autres accessoires interactifs existant pour consoles de jeu, et en particulier les accessoires de type caméra et manette interactive. En effet, le dispositif selon l'invention permet d'évaluer la position de la projection du centre de gravité de l'utilisateur sur la surface supérieure de la plateforme, que celle-ci soit utilisée comme une plateforme stable ou comme une planche d'équilibre. Cette information complète celles issues des périphériques de type caméra et manette interactive établissant une localisation d'éléments clés de l'utilisateur (découpe, positions des mains tenant les manettes...) et permet d'évaluer, en combinaison avec ces dernières et alors que cela n'est réalisable par aucun des périphériques indiqués pris isolément, une modélisation corporelle précise des postures de l'utilisateur.

L'invention est décrite dans ce qui précède à titre d'exemple. Il est entendu que l'homme du métier est à même de réaliser différentes variantes de l'invention sans pour autant sortir du cadre du brevet. Les revendications définissent l'objet de la protection demandée.

## Revendications

1. Dispositif pour la pratique interactive de la gymnastique en association avec une unité de traitement numérique (5) exécutant un programme de gymnastique à suivre par un utilisateur, comprenant une plateforme (1) munie d'un système de capteurs (6) adapté pour capter la position d'obstacles et/ou des pieds de l'utilisateur autour de ladite plateforme, le système de capteurs étant un système de télémètres, et de moyens de transmission (4) des signaux issus des capteurs à l'unité de traitement numérique,
dans lequel
la plateforme (1) est munie de pieds (3) amovibles, de sorte à pouvoir être utilisée selon un premier état avec les pieds, dans lequel la plateforme est soutenue par les pieds, et dans un second état sans les pieds, dans lequel la partie inférieure de la plate forme repose sur le sol, la partie inférieure (7) de la plateforme étant convexe,
et dans lequel le système de télémètres (6) est apte à indiquer l'inclinaison de la plateforme sans les pieds par évaluation de la distance de la plateforme (1) avec le sol.

2. Dispositif selon la revendication 1, dans lequel le système de télémètres (6) comprend des télémètres à ultra-son, à infra rouge ou radio, ou une combinaison de ceux-ci.

3. Dispositif selon la revendication 1 ou 2, dans lequel les axes principaux des télémètres sont situés sur un plan parallèle au sol.

4. Dispositif selon la revendication 1 ou 2, dans lequel les axes principaux des télémètres sont dirigés vers le sol, à une distance définie de la plateforme (1).

5. Dispositif selon l'une des revendications 1 à 4, dans lequel les télémètres (6) sont disposés aux quatre côtés du plus petit rectangle inscrit dans la surface supérieure (2) de la plateforme.

6. Dispositif selon l'une des revendications précédentes, dans lequel les pieds (3) comportent des capteurs de pression sur lesquels appuie un corps de la plateforme.

7. Dispositif selon l'une des revendications précédentes, dans lequel des capteurs de pression situés dans un corps de la plateforme appuient sur les pieds de la plateforme.

8. Dispositif selon l'une des revendications précédentes, dans lequel la plateforme (1) comprend un système de capteurs angulaires, constitué par des gyroscopes ou des accéléromètres.

9. Dispositif selon l'une des revendications précédentes, dans lequel il est prévu un système de liaison bidirectionnel (4) entre la plateforme (1) et l'unité de traitement numérique (5).

10. Dispositif selon l'une des revendications précédentes, dans lequel les signaux émis (11) par la plateforme et transmis par le système de liaison (4) comprennent un signal spécifique identifiant le dispositif émetteur des signaux.

11. Dispositif selon l'une des revendications 1 à 10, dans lequel le système de capteurs (6) comprend une phase de calibrage où l'utilisateur se place sur la plateforme (1), et pendant laquelle le système de positionnement des obstacles autour de la plateforme est apte à établir puis mémoriser une topologie des obstacles qui ne sont pas constitués par les pieds de l'utilisateur.

12. Dispositif selon la revendication 11, dans lequel certains télémètres sont des télémètres à infra rouge placés derrière des lentilles diffractant les signaux qu'ils émettent et focalisant les signaux retours.

13. Dispositif selon la revendication 11, dans lequel le système de capteurs est apte à déterminer la forme du pied de l'utilisateur, pointant face à la plateforme (1) ou de profil, à partir du calibrage réalisé au début de la séance.

## Patentansprüche

1. Vorrichtung zur interaktiven Ausübung von Gymnastik in Verbindung mit einer digitalen Verarbeitungseinheit (5), die ein von einem Benutzer zu befolgendes Gymnastikprogramm durchführt, umfassend eine mit einem Sensorsystem (6) versehene Plattform (1), die geeignet ist, die Position von Hindernissen und/oder Füßen des Benutzers um die Plattform herum zu erfassen, wobei das Sensorsystem ein Entfernungsmesser-System ist, und Mittel (4) zum Übertragen von Signalen von den Sensoren zu der digitalen Verarbeitungseinheit,
wobei
die Plattform (1) mit abnehmbaren Füßen (3) versehen ist, so dass sie in einem ersten Zustand mit den Füßen, wobei die Plattform von den Füßen getragen wird, und in einem zweiten Zustand ohne die Füße, wobei der untere Teil der Plattform auf dem Boden ruht, verwendet werden kann, wobei der untere Teil (7) der Plattform konvex ist,
und wobei das Entfernungsmessersystem (6) geeignet ist, die Neigung der Plattform ohne die Füße durch Auswertung des Abstands von der Plattform (1) zum Boden anzuzeigen.

2. Vorrichtung nach Anspruch 1, wobei das Entfernungsmessersystem (6) Ultraschall-, Infrarot- oder Funk-Entfernungsmesser oder eine Kombination davon umfasst.

3. Vorrichtung nach Anspruch 1 oder 2, wobei sich die Hauptachsen der Entfernungsmesser auf einer Ebene parallel zum Boden befinden.

4. Vorrichtung nach Anspruch 1 oder 2, wobei die Hauptachsen der Entfernungsmesser in einem definierten Abstand von der Plattform (1) zum Boden gerichtet sind.

5. Vorrichtung nach einem der Ansprüche 1 bis 4, wobei die Entfernungsmesser (6) auf allen vier Seiten des kleinsten Rechtecks angeordnet sind, das sich in die Oberfläche (2) der Plattform befindet.

6. Vorrichtung nach einem der vorstehenden Ansprüche, wobei die Füße (3) Drucksensoren umfassen, auf denen ein Körper der Plattform gestützt ist.

7. Vorrichtung nach einem der vorstehenden Ansprüche, wobei sich Drucksensoren, die sich in einem Körper der Plattform befinden, auf die Füße der Plattform stützen.

8. Vorrichtung nach einem der vorstehenden Ansprüche, wobei die Plattform (1) ein Winkelsensorsystem umfasst, das aus Gyroskopen oder Beschleunigungsmessern besteht.

9. Vorrichtung nach einem der vorstehenden Ansprüche, wobei ein bidirektionales Verbindungssystem (4) zwischen der Plattform (1) und der digitalen Verarbeitungseinheit (5) vorgesehen ist.

10. Vorrichtung nach einem der vorstehenden Ansprüche, wobei die von der Plattform und die vom Verbindungssystem (4) übertragenen Signale (11) ein spezifisches Signal umfassen, das die Vorrichtung identifiziert, die die Signale sendet.

11. Vorrichtung nach einem der vorstehenden Ansprüche 1 bis 10, wobei das Sensorsystem (6) eine Kalibrierphase umfasst, wobei sich der Benutzer auf die Plattform (1) stellt, und während derer das Positionierungssystem der Hindernisse um die Plattform herum geeignet ist, eine Topologie der Hindernisse zu erstellen und zu speichern, die nicht von den Füßen des Benutzers gebildet werden.

12. Die Vorrichtung nach Anspruch 11, wobei einige Entfernungsmesser hinter Linsen angeordnete Infrarot-Entfernungsmesser sind, die die abgestrahlten Signale beugen und die Rückmeldesignale fokussieren.

13. Vorrichtung nach Anspruch 11, wobei das Sensorsystem geeignet ist, die Form des Fußes des Benutzers der zur Plattform (1) oder im Profil ausgerichtet ist, aus der zu Beginn der Sitzung durchgeführten Kalibrierung zu bestimmen

## Claims

1. A device for the interactive practice of gymnastics in association with a digital processing unit (5) executing a gymnastics program to be followed by an user, comprising a platform (1) provided with a sensor system (6) adapted to sense the position of obstacles and/or of the feet of the user around said platform, the sensor system being a rangefinder system, and means (4) for transmitting the signals from the sensors to the digital processing unit,
wherein
the platform (1) is provided with removable feet (3), so as to be able to be used in a first state with the feet, wherein the platform is supported by the feet, and in a second state without the feet, wherein the lower portion of the platform rests on the ground, the lower portion (7) of the platform being convex,
and wherein the rangefinder system (6) is capable of indicating the inclination of the platform without the feet by evaluation of the distance from the platform (1) to the ground.

2. The device according to claim 1, wherein the rangefinder system (6) comprises ultrasonic, infrared or radio rangefinders, or a combination thereof.

3. The device according to claim 1 or 2, wherein the principal axes of the rangefinders are located on a plane parallel to the ground.

4. The device according to claim 1 or 2, wherein the principal axes of the rangefinders are directed toward the ground, at a defined distance from the platform (1).

5. The device according to one of claims 1 to 4, wherein the rangefinders (6) are disposed at the four sides of the smallest rectangle inscribed in the upper surface (2) of the platform.

6. The device according to one of the preceding claims, wherein the feet (3) comprise pressure sensors on which a body of the platform presses.

7. The device according to one of the preceding claims, wherein the pressure sensors located in a body of the platform press on the feet of the platform.

8. The device according to one of the preceding claims, wherein the platform (1) comprises an angular sensor system, consisting of gyroscopes or accelerometers.

9. The device according to one of the preceding claims, wherein a bidirectional connection system (4) between the platform (1) and the digital processing unit (5) is provided.

10. The device according to one of the preceding claims, wherein the signals emitted (11) by the platform and transmitted by the connection system (4) comprise a specific signal identifying the device emitting the signals.

11. The device according to one of claims 1 to 10, wherein the sensor system (6) comprises a calibration phase where the user positions himself on the platform (1), and during which the system for positioning the obstacles around the platform is capable of establishing, then saving to memory, a topology of the obstacles which do not consist of the feet of the user.

12. The device according to claim 11, wherein certain rangefinders are infrared rangefinders located behind the lenses diffracting the signals that they emit and focusing the return signals.

13. The device according to claim 11, wherein the sensor system is capable of determining the shape of the foot of the user, pointing facing the platform (1) or in profile, based on the calibration performed at the beginning of the session.
